# EUROPÄISCHE PATENTSCHRIFT

(11) **EP 2 233 767 B1**
(45) Veröffentlichungstag und Bekanntmachung des Hinweises auf die Patenterteilung: **02.11.2011**
(21) Anmeldenummer: 10155166.1
(22) Anmeldetag: 02.03.2010
(51) Int. Cl.: F16D 55/2265, F16D 65/00, F16J 3/04

(54) **Bremssattelführung für eine Scheibenbremse sowie Sicherungsring**
Brake saddle guide for a disc brake and fastening ring
Guidage d'étrier pour un frein à disque, ainsi que bague de sécurité

(30) Priorität: 10.03.2009 DE 102009011935
(43) Veröffentlichungstag der Anmeldung: 29.09.2010
(73) Patentinhaber: BPW Bergische Achsen KG, 51674 Wiehl (DE)
(72) Erfinder: Abt, Christian, 51643 Gummersbach (DE)
(74) Vertreter: Christophersen & Partner

(56) Entgegenhaltungen:
- EP-A1- 0 381 306
- WO-A1-2009/124685
- DE-A1-102004 003 083

## Beschreibung

Die Erfindung betrifft eine Bremssattelführung für eine Scheibenbremse, mit einem aus einer Axialbohrung und einem relativ darin längsbeweglichen Führungsholm zusammengesetzten Gleitlager, mit einem zum Schutz des Gleitlagers den Führungsholm auf einer Teillänge umgebenden Faltenbalg, der zu seiner Festlegung an dem Führungsholm mit einem in einer Ringnut des Führungsholms sitzenden Wulst versehen ist, und mit einem den Führungsholm umgebenden, sich in Längsrichtung bis über den Wulst erstreckenden Ring.

Eine Bremssattelführung mit diesen Merkmalen ist aus der DE 10 2004 003 083 A1 bekannt. Die Führung des Bremssattels an einem achsfesten Bremsträger erfolgt mittels Gleitlagern aus jeweils einem an dem Bremsträger befestigten Führungsholm und einer zu diesem Führungsholm längsbeweglichen Axialbohrung. Diese befindet sich an einer Lagerbuchse, die ihrerseits in eine umgebende Bohrung des Bremssattels eingepresst ist. Zum Schutz der Führung gegen ein Eindringen von Staub und Schmutz dient ein Faltenbalg, dessen eines Ende gegenüber dem Bremssattel und dessen anderes Ende gegenüber dem Bremsträger festgelegt ist. Das gegenüber dem Bremsträger festgelegte Ende ist zu diesem Zweck mit einem Wulst versehen, der in einer Ringnut des Führungsholms sitzt. Zur Sicherung des Wulstes dient ein zusätzlicher Ring, welcher den Führungsholm umgibt und sich bis über den Wulst erstreckt und diesen auf diese Weise sichert.

Durch den zusätzlichen Ring wird zwar eine zuverlässige Sicherung des Faltenbalgs in montiertem Zustand erzielt, jedoch weist die bekannte Bauart Nachteils während der Montage des Bremssattels auf. Bei der Montage des Bremssattels ist der Führungsholm bereits in diesen eingesetzt, und der Faltenbalg mittels des zusätzlichen Rings bereits auf dem Führungsholm befestigt. Das bei Montage nicht zu vermeidende Stauchen des Faltenbalgs führt allerdings zu einem erhöhten Längsdruck im Faltenbalg, dem der Ring nicht standhalten kann. Dadurch kann sich der Ring einschließlich des Endes des Faltenbalges wieder von dem Führungsholm lösen, noch bevor dieser an dem Bremsträger der Scheibenbremse befestigt ist.

Auch bei der WO 2009/124685 A1, bei der es sich um einen Stand der Technik nach Art. 54 (3) EPÜ handelt, ist der Faltenbalg zu seiner Festlegung an dem Führungsholm mit einem in einer Ringnut des Führungsholms sitzenden Wulst versehen, sowie mit einem den Führungsholm umgebenden, sich in Längsrichtung bis über den Wulst erstreckenden Ring.

Der Ring liegt von außen her auf dem Wulst auf, wodurch der Wulst an einem Austreten aus der Ringnut des Führungsholms gehindert ist.

Aufgabe der Erfindung ist es, durch bauliche Maßnahmen an der Bremssattelführung bzw. im Bereich des den Faltenbalg sichernden Rings die Montage des Bremssattels an dem Bremsträger zu vereinfachen.

Hierzu ist eine Bremssattelführung mit den eingangs angegebenen Merkmalen gekennzeichnet durch eine innen an dem Ring ausgebildete Struktur, welche durch Eingriff in die Ringnut den Ring in dem Faltenbalg abgewandter Längsrichtung an der Ringnut verriegelt.

Durch die Verriegelung des Rings in dem Faltenbalg abgewandter Längsrichtung wird das Ende des Faltenbalgs auch dann noch sicher auf dem Führungsholm gehalten, wenn der Faltenbalg während des Montageprozesses stark gestaucht wird. Ein ungewolltes Abrutschen des Endes des Faltenbalges einschließlich des Ringes von dem Führungsholm wird sicher verhindert.

Zur Lösung der oben genannten Aufgabe wird ferner ein Sicherungsring für einen Faltenbalg vorgeschlagen, wobei dieser Sicherungsring zur axialen Verriegelung in einer Ringnut innen mit radial federnd angeordneten Strukturen versehen ist, die sich jeweils nur über einen Teilumfang des Rings erstrecken.

Vorteilhafte Ausgestaltungen der erfindungsgemäßen Bremssattelführung sowie des erfindungsgemäßen Sicherungsrings sind in den jeweiligen Unteransprüchen angegeben.

Von Vorteil ist insbesondere, wenn sich mit den Strukturen versehene Segmente des Rings mit anderen Segmenten abwechseln, auf denen der Ring jeweils mit einem sich axial erstreckenden Bund versehen ist. Im montierten Zustand erstreckt sich jeder Bund bis über den Wulst des Faltenbalgs, und sichert diesen gegen ein Austreten aus der Ringnut.

Mit einer weiteren Ausgestaltung wird vorgeschlagen, dass der Ring auf dem die Struktur aufweisenden Teilumfang einen radial inneren und einen radial äußeren Querschnittsbereich aufweist, wobei der innere Querschnittsbereich die Struktur aufweist und radial federnd ausgebildet ist, wohingegen der äußere Querschnittsbereich in Radial- und Umfangsrichtung starr ausgebildet ist. Vorzugsweise sind der radial innere und der radial äußere Querschnittsbereich durch ein sich in Umfangsrichtung erstreckendes Langloch voneinander getrennt.

Ein Ausführungsbeispiel der Erfindung wird nachfolgend anhand der Zeichnungen erläutert. Darin zeigen:
- Fig. 1: in perspektivischer, zum Teil geschnittener Ansicht eine Fahrzeugscheibenbremse in schwimmender Bauart des Bremssattels, wobei die Bremsscheibe und die Bremsbeläge der Scheibenbremse weggelassen sind;
- Fig. 2: in gegenüber Fig. 1 vergrößerter Darstellung einen an dem Bremsträger der Scheibenbremse befestigten Führungsholm;
- Fig. 2a: eine vergrößerte Darstellung des in Fig. 2 mit IIa bezeichneten Details;
- Fig. 2b: eine vergrößerte Darstellung des in Fig. 2 mit IIb bezeichneten Details, und
- Fig. 3: in perspektivischer Wiedergabe einen Sicherungsring.

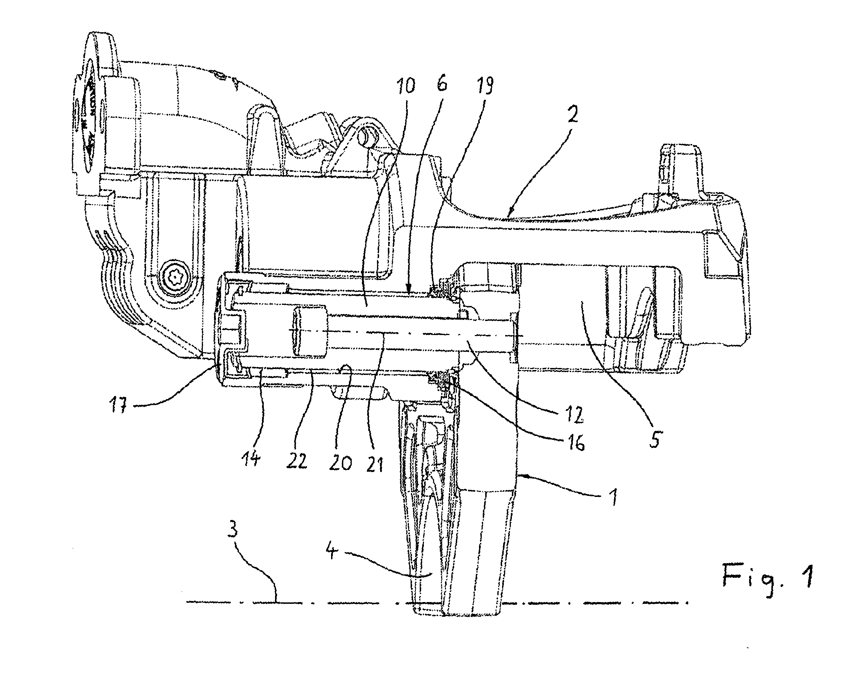

Die in Fig. 1 wiedergegebene Scheibenbremse für ein Fahrzeug und insbesondere für einen Schwerlast-Nutzfahrzeuganhänger besteht in erster Linie aus einem Bremsträger 1 und einem schwimmend, d. h. gleitbeweglich an dem Bremsträger 1 befestigten Bremssattel 2. Andere, ebenfalls wichtige Bauteile der Scheibenbremse sind nicht wiedergegeben, da im Rahmen der Erläuterung der Erfindung weniger bedeutsam. Dies gilt etwa für die um die Drehachse 3 drehbare Bremsscheibe, und für die in einem Belagschacht 5 angeordneten Bremsbeläge der Scheibenbremse.

Der Bremsträger 1 ist ein so genannter rahmenloser Bremsträger. Er ist flach gestaltet und umgreift oder übergreift die Bremsscheibe nicht. Er erstreckt sich parallel zur Bremsscheibe sowie quer zu der Drehachse 3 der Bremsscheibe und er ist mittels einer maulartigen Öffnung 4 fest an einem Fahrwerksteil des Fahrzeugs befestigbar, beispielsweise an einem Achskörper, von dem nur dessen Mittellinie 3 bezeichnet ist. An seinem Ende ist der Achskörper mit der Lagerung für das Fahrzeugrad und die Bremsscheibe versehen, die sich daher beide um die mit der Mittellinie 3 zusammenfallende Drehachse drehen.

Der Bremsträger 1 ist, dem Bremskörper abgewandt, mit einer Ausnehmung versehen, in welcher mit geringem Spiel der fahrzeuginnere der beiden Bremsbeläge sitzt, so dass die Bremsmomente von diesem Bremsbelag unmittelbar auf den Bremsträger 1 abgeführt werden. Der äußere der beiden Bremsbeläge hingegen sitzt in dem Bremssattel 2, welcher zu diesem Zweck mit Abstützflächen versehen ist, welche die Bremsmomente des äußeren Bremsbelags aufnehmen.

Die so an dem schwimmend gelagerten Bremssattel 2 wirkenden Brems- bzw. Bremsreaktionsmomente müssen auf den fahrwerksfesten Bremsträger 1 übertragen werden. Zu diesem Zweck ist der Bremssattel 2 über zwei Gleitlager 6 in Längsrichtung beweglich an dem Bremsträger 1 angeordnet. Hierbei ist das eine, auf der Zeichnung dargestellte Lager 6 als Festlager ausgebildet, und das andere Lager als Loslager. Als Festlager wird üblicherweise und auch hier eine präzis arbeitende Axialführung bezeichnet, welche im Bremsbetrieb den Bremssattel 2 möglichst reibungsarm führt, um so die Bremsbeläge gegen die rotierende Bremsscheibe zu bewegen.

Seitens des Bremsträgers 1 gehört zu der Axialführung 6 ein länglicher Führungsholm 10, der mittels einer Schraube 12 starr gegen den Bremsträger 1 befestigt ist. Die glatt bearbeitete zylindrische Außenseite 14 des Führungsholms 10 bildet das erste Element der Axialführung 6.

Seitens des Bremssattels 2 gehört zu der Axialführung 6 eine in eine Bohrung 20 des Bremssattels 2 eingesetzte Lagerbuchse 22. Die zylindrische Bohrung 20 ist unmittelbar im Material des Bremssattels 2 ausgebildet. Die Lagerbuchse 22 ist vorzugsweise eine dauergeschmierte Gleitlagerbuchse, deren Innenwandung das zweite Element der Axialführung 6 bildet.

Um ein Eindringen von Staub und Schmutz in den Bereich dieser Führung zu verhindern, sind zu beiden Enden der Führung hin Dichtungen vorgesehen. Zum Bremsträger 1 hin ist zur Abdichtung ein Faltenbalg 16 vorgesehen, dessen Einzelheiten im Folgenden noch näher erläutert werden. Das andere, also dem Bremsträger 1 abgewandte Ende der Führung ist durch eine Kappe 17 abgedichtet, die auf eine dort vorhandene Öffnung des Bremssattels 2 aufgesteckt ist.

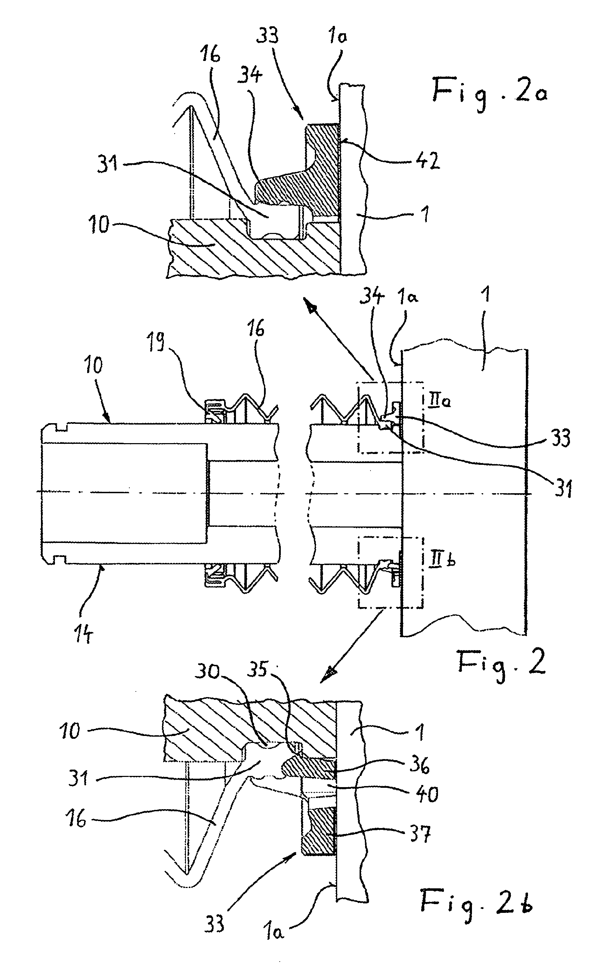

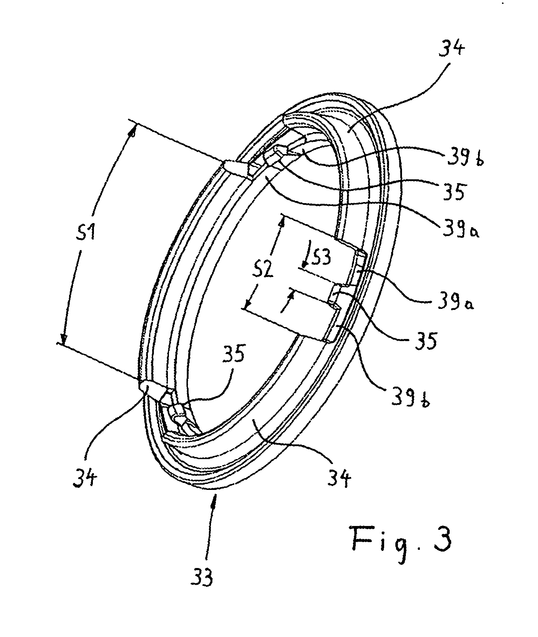

Anhand der Figuren 2 und 3 werden im Folgenden Einzelheiten der Abdichtung zu dem Bremsträger 1 hin beschrieben.

Der den Führungsholm 10 auf einer Teillänge umgebende Faltenbalg 16 ist an seinem auf der Zeichnung linken, d. h. dem Bremsträger 1 abgewandten Ende mit einem dortigen Dichtabschnitt 19 gegenüber dem Bremssattel 2 abgedichtet. Hierzu sitzt der Dichtabschnitt 19, wie Fig. 1 zeigt, in einer entsprechend gestalteten, den Führungsholm 10 umgebenden Ausdrehung des Bremssattels 2.

Das andere, d.h. das dem Bremsträger 1 zugewandte Ende des Faltenbalgs 16 ist nahe des Bremsträgers 1 direkt an dem Führungsholm 10 befestigt. Zu diesem Zweck ist der Führungsholm 10 mit geringem axialem Abstand zu der Außenseite 1 a des Bremsträgers 1 mit einer umlaufenden Ringnut 30 versehen, die hier im Wesentlichen als Rechtecknut gestaltet ist. In der Ringnut 30 sitzt ein Wulst 31, welcher das dem Bremsträger 1 zugewandte Ende des Faltenbalgs 16 bildet. Der Wulst 31 hat einen über seinen Umfang gleich bleibenden, im Wesentlichen rechteckigen Querschnitt, und er ist einstückiger Bestandteil des aus elastischem Material und vorzugsweise Gummi bestehenden Faltenbalgs 16. Entsprechend dem im Wesentlichen rechteckförmigen Querschnitt der Ringnut 30 ist auch der Wulst 31 des Faltenbalgs von im Wesentlichen rechteckigem Querschnitt. Er befindet sich zum Teil in, und zum anderen Teil außerhalb der Ringnut.

Um den elastisch verformbaren Wulst 31 in der Ringnut 30 zu sichern und ihn zugleich gegen die Ringnut 30 abzudichten, ist zusätzlich ein Ring 33 vorhanden. Dieser übt einen nach radial innen gerichteten Druck auf den Wulst 31 aus.

In Fig. 3 ist dieser Ring 33 perspektivisch dargestellt. Er setzt sich, in Umfangsrichtung betrachtet, aus insgesamt drei größeren Segmenten S1 und drei kleineren Segmenten S2 zusammen, wobei sich jeweils Segmente S1 und S2 abwechseln. Entlang jedes Segments S1 ist der Ring mit einem sich axial erstreckenden Bund 34 versehen. Gemäß Fig. 2a erstreckt sich der Bund 34 bis über den Wulst 31 und er stützt sich zudem von außen her auf dem Wulst 31 ab. Auf diese Weise wird der Wulst zur Erzielung einer ausreichenden Abdichtung in die Ringnut 30 hinein gedrückt. Aufgrund der relativ großen Umfangslänge jedes Bundes 34 wird der Wulst 31 auf dem überwiegenden Teil seines Gesamtumfangs durch die Bunde 34 umgriffen, wodurch eine gute Abdichtung des Faltenbalgs 16 gegenüber dem Führungsholm 10 erreicht wird.

Auf den in Umfangsrichtung deutlich kürzeren Segmenten S2 ist der Ring 33 innen mit einer Struktur 35 in Gestalt einer federnden Nase versehen. Die Struktur 35 arretiert den Ring 33 an der Ringnut 30, wodurch der Ring 33 in dem Faltenbalg 16 abgewandter Längsrichtung verriegelt ist. Die Fig. 2b zeigt anhand eines Schnitts durch eines der Segmente S2, dass die Struktur 35 eine nach radial innen vorspringende Nase ist, welche sich gegen die dem Bremsträger 1 nähere Wandung der Ringnut 30 abstützt. Auf diese Weise kann der Ring 33 nicht nach rechts in Fig. 2 von dem zylindrischen Führungsholm 10 abrutschen. Diese Lagesicherung des Rings 33 in Längsrichtung ist, wie oben beschrieben, bei der Montage des Bremssattels von großem Vorteil.

Damit die radial vorspringende Struktur 35 in die Ringnut 30 einrasten und darin arretieren kann, muss der Wulst 31 in diesem Bereich teilweise verdrängt, d.h. gestaucht werden, was jedoch aufgrund der Elastizität seines Materials ohne weiteres gelingt. Außerdem erstreckt sich die Struktur 35 weniger weit in axialer Richtung (Fig. 2b), als der Bund 34 (Fig. 2a).

Um das selbsttätige Verrasten bzw. Verriegeln der Struktur 35 in der Ringnut 30 zu ermöglichen, ist die Struktur 35 nach radial innen federbelastet. Dies wird unter Verzicht auf gesonderte Federelemente erreicht, indem der Ring 33 im Umfangsbereich der Segmente S2 einen zweigeteilten Querschnitt aufweist. Denn dort weist der Ring 33 einen radial inneren Querschnittsbereich 36 und einen radial äußeren Querschnittsbereich 37 auf (Fig. 2b). Die den Ring sichernde Struktur 35 ist an dem inneren Querschnittsbereich 36 angeformt, der zudem radial federnd ausgebildet ist. Dieses Federverhalten wird durch eine entsprechend geringe Materialdicke in dem Bereich 36 erreicht. Zu einem hinreichenden Einfedern der Struktur 35 trägt ferner bei, dass gemäß Fig. 3 das Segment S3, über welches sich die Struktur 35 erstreckt, in Umfangsrichtung nochmals kürzer ist, als das Segment S2. Denn in Umfangsrichtung befinden sich vor und hinter der Struktur 35 dünnwandige Stege 39a, 39b, welche das radiale Federn der zwischen ihnen auf dem Segment S3 angeordneten Struktur 35 ermöglichen.

Der radial äußere Querschnittsbereich 37 weist hingegen eine deutlich größere Materialdicke auf, wodurch der Ring 33 in dem äußeren Querschnittsbereich 37 sowohl in Radialrichtung als auch in Umfangsrichtung im Wesentlichen starr ausgebildet ist. Entlang jedes Segments S2 sind der innere Querschnittsbereich 36 und der äußere Querschnittsbereich 37 durch ein sich in Umfangsrichtung erstreckendes Langloch 40 voneinander getrennt, um so ein ausreichendes radiales Federn des elastischen inneren Querschnittsbereichs 36 im Vergleich zum starren äußeren Querschnittsbereich 37 zu ermöglichen.

Nachdem der Führungsholm 10 an dem Bremsträger 1 verschraubt ist, kann sich der Ring 33 mit seiner Außenseite 42 gegen die Außenseite 1 a des Bremsträgers abstützen.

### Bezugszeichenliste

- 1: Bremsträger
- 1 a: Außenseite des Bremsträgers
- 2: Bremssattel
- 3: Drehachse, Mittellinieachskörper
- 4: Öffnung
- 5: Belagschacht
- 6: Gleitlager, Axialführung
- 10: Führungsholm
- 12: Schraube
- 14: Außenseite
- 16: Faltenbalg
- 17: Kappe
- 19: Dichtabschnitt
- 20: Bohrung
- 21: Mittelachse
- 22: Lagerbuchse
- 30: Ringnut
- 31: Wulst
- 33: Ring
- 34: Bund
- 35: Struktur
- 36: innerer Querschnittsbereich
- 37: äußerer Querschnittsbereich
- 39a: Steg
- 39b: Steg
- 40: Langloch
- 42: Außenseite

- S1: Segment
- S2: Segment
- S3: Segment

## Patentansprüche

1. Bremssattelführung für eine Scheibenbremse, mit einem aus einer Axialbohrung und einem relativ darin längsbeweglichen Führungsholm (10) zusammengesetzten Gleitlager (6), mit einem zum Schutz des Gleitlagers (6) den Führungsholm (10) auf einer Teillänge umgebenden Faltenbalg (16), der zu seiner Festlegung an dem Führungsholm (10) mit einem in einer Ringnut (30) des Führungsholms (10) sitzenden Wulst (31) versehen ist, und mit einem den Führungsholm (10) umgebenden, sich in Längsrichtung bis über den Wulst (31) erstreckenden Ring (33), **gekennzeichnet durch** eine innen an dem Ring (33) ausgebildete Struktur (35), welche **durch** Eingriff in die Ringnut (30) den Ring (33) in dem Faltenbalg (16) abgewandter Längsrichtung an der Ringnut (30) verriegelt.

2. Bremssattelführung nach Anspruch 1, **dadurch gekennzeichnet, dass** der Ring (33) nur über einen Teilumfang mit der Struktur (35) versehen ist.

3. Bremssattelführung nach Anspruch 2, **dadurch gekennzeichnet, dass** die Struktur (35) in Umfangsrichtung des Rings (33) mehrfach und über den Umfang gleichmäßig verteilt vorhanden ist.

4. Bremssattelführung nach Anspruch 3, **gekennzeichnet durch** insgesamt drei Strukturen (35).

5. Bremssattelführung nach Anspruch 3 oder 4, **dadurch gekennzeichnet, dass** sich mit den Strukturen (35) versehene Segmente (S2) des Rings (33) mit anderen Segmenten (S1) abwechseln, auf denen der Ring (33) jeweils mit einem sich in Längsrichtung bis über den Wulst (31) erstreckenden Bund (34) versehen ist.

6. Bremssattelführung nach einem der vorangehenden Ansprüche, **dadurch gekennzeichnet, dass** die Struktur (35) radial federnd angeordnet ist.

7. Bremssattelführung nach einem der Ansprüche 2 - 6, **dadurch gekennzeichnet, dass** der Ring (33) auf dem die Struktur (35) aufweisenden Teilumfang einen radial inneren (36) und einen radial äußeren (37) Querschnittsbereich aufweist, wobei der innere Querschnittsbereich (36) die Struktur (35) aufweist und radial federnd ausgebildet ist, und der äußere Querschnittsbereich (37) in Radial- und Umfangsrichtung starr ausgebildet ist.

8. Bremssattelführung nach Anspruch 7, **dadurch gekennzeichnet, dass** der radial innere (36) und der radial äußere (37) Querschnittsbereich durch ein sich in Umfangsrichtung erstreckendes Langloch (40) voneinander getrennt sind.

9. Sicherungsring zur Sicherung eines einen Führungsholm einer Bremssattelführung auf einer Teillänge umgebenden Faltenbalgs, **dadurch gekennzeichnet, dass** der Sicherungsring (33) zur axialen Verriegelung in einer Ringnut (30) des Führungsholms (10) innen mit radial federnd angeordneten Strukturen (35) versehen ist, die sich jeweils nur über einen Teilumfang des Sicherungsrings (33) erstrecken.

10. Sicherungsring nach Anspruch 9, **dadurch gekennzeichnet, dass** sich mit den Strukturen (35) versehene Segmente (S2) des Rings (33) mit anderen Segmenten (S1) abwechseln, auf denen der Ring (33) jeweils mit einem sich axial erstreckenden Bund (34) versehen ist.

11. Sicherungsring nach Anspruch 9, **dadurch gekennzeichnet, dass** dieser auf dem die Struktur (35) aufweisenden Teilumfang einen radial inneren (36) und einen radial äußeren (37) Querschnittsbereich aufweist, wobei der innere Querschnittsbereich (36) die Struktur (35) aufweist und radial federnd ausgebildet ist, und der äußere Querschnittsbereich (37) in Radial- und Umfangsrichtung starr ausgebildet ist.

12. Sicherungsring nach Anspruch 11, **dadurch gekennzeichnet, dass** der radial innere (36) und der radial äußere (37) Querschnittsbereich durch ein sich in Umfangsrichtung erstreckendes Langloch (40) voneinander getrennt sind.

## Claims

1. A brake saddle guide for a disc brake, with a slide bearing (6) formed from an axial bore and a guide bar (10) movable longitudinally therein relative thereto, with a folding bellows (16) which surrounds the guide bar (10) on a portion of the length in order to protect the slide bearing (6) and which, in order to fasten it on the guide bar (10), is provided with a bead (31) positioned in an annular groove (30) in the guide bar (10), and with a ring (33) which surrounds the guide bar (10) and which extends beyond the bead (31) in the longitudinal direction, **characterized by** a structure (35) which is formed on the inside of the ring (33) and which by engaging in the annular groove (30) locks the ring (33) on the annular groove (30) in a longitudinal direction facing away from the folding bellows (16).

2. A brake saddle guide according to claim 1, **characterized in that** the ring (33) is provided with the structure (35) only over a portion of the periphery.

3. A brake saddle guide according to claim 2, **characterized in that** the structure (35) is provided a multiplicity of times in the peripheral direction of the ring (33) and distributed uniformly over the periphery.

4. A brake saddle guide according to claim 3, **characterized by** three structures (35) altogether.

5. A brake saddle guide according to claim 3 or 4, **characterized in that** segments (S2) of the ring (33) provided with the structures (35) alternate with other segments (S1) on which the ring (33) is provided in each case with a collar (34) extending beyond the bead (31) in the longitudinal direction.

6. A brake saddle guide according to any one of the preceding claims, **characterized in that** the structure (35) is arranged in a radially resilient manner.

7. A brake saddle guide according to any one of claims 2 to 6, **characterized in that** on the portion of the periphery having the structure (35) the ring (33) has a radially inner cross-sectional area (36) and a radially outer cross-sectional area (37), wherein the inner cross-sectional area (36) has the structure (35) and is made radially resilient and the outer cross-sectional area (37) is made rigid in the radial and peripheral directions.

8. A brake saddle guide according to claim 7, **characterized in that** the radially inner cross-sectional area (36) and the radially outer cross-sectional area (37) are separated from each other by an elongate hole (40) extending in the peripheral direction.

9. A fastening ring for fastening a folding bellows surrounding a guide bar of a brake saddle guide on a portion of the length, **characterized in that** - for axial locking in an annular groove (30) in the guide bar (10) - the fastening ring (33) is provided on the inside with structures (35) which are arranged in a radially resilient manner and which extend in each case only beyond part of the periphery of the fastening ring (33).

10. A fastening ring according to claim 9, **characterized in that** segments (S2) of the ring (33) provided with the structures (35) alternate with other segments (S1) on which the ring (33) is provided in each case with an axially extending collar (34).

11. A fastening ring according to claim 9, **characterized in that** on the portion of the periphery having the structure (35) the fastening ring has a radially inner cross-sectional area (36) and a radially outer cross-sectional area (37), wherein the inner cross-sectional area (36) has the structure (35) and is made radially resilient, and the outer cross-sectional area (37) is made rigid in the radial and peripheral directions.

12. A fastening ring according to claim 11, **characterized in that** the radially inner cross-sectional area (36) and the radially outer cross-sectional area (37) are separated from each other by an elongate hole (40) extending in the peripheral direction.

## Revendications

1. Guidage d'étrier de frein pour un frein à disque, comportant un palier lisse (6), formé par un alésage axial et une barre de guidage (10) mobile longitudinalement dans ce dernier par rapport à ce dernier, comportant un soufflet (16), qui entoure la barre de guidage (10) sur une partie de sa longueur en vue de la protection du palier lisse (6) et qui est muni d'un boudin (31), posé dans une rainure annulaire (30) de la barre de guidage (10) en vue de son immobilisation sur la barre de guidage (10), et comportant une bague (33) qui entoure la barre de guidage (10) et qui s'étend dans la direction longitudinale jusqu'au-delà du boudin (31), **caractérisé par** une structure (35), qui est réalisée à l'intérieur sur la bague (33) et qui, sous l'effet de son engagement dans la rainure annulaire (30), bloque la bague (33) sur la rainure annulaire (30) dans le sens longitudinal opposé au soufflet (16).

2. Guidage d'étrier de frein selon la revendication 1, **caractérisé en ce que** la bague (33) est munie de la structure (35) uniquement sur une portion de sa périphérie.

3. Guidage d'étrier de frein selon la revendication 2, **caractérisé en ce que** la structure (35) est présente plusieurs fois dans la direction circonférentielle de la bague (33) et est répartie uniformément sur la périphérie.

4. Guidage d'étrier de frein selon la revendication 3, **caractérisé par** trois structures (35) au total.

5. Guidage d'étrier de frein selon la revendication 3 ou 4, **caractérisé en ce que** des segments (S2) de la bague (33), munis des structures (35), alternent avec d'autres segments (S1), sur lesquels la bague (33) est munie respectivement d'un collet (34) qui s'étend dans la direction longitudinale jusqu'au-delà du boudin (31).

6. Guidage d'étrier de frein selon l'une quelconque des revendications précédentes, **caractérisé en ce que** la structure (35) est agencée de manière élastique dans la direction radiale.

7. Guidage d'étrier de frein selon l'une quelconque des revendications 2 à 6, **caractérisé en ce que** la bague (33), sur sa portion périphérique munie de la structure (35), comporte une zone de section radialement intérieure (36) et une zone de section radialement extérieure (37), la zone de section intérieure (36) comportant la structure (35) et étant réalisée de manière élastique dans la direction radiale, et la zone de section extérieure (37) étant réalisée de manière rigide dans la direction radiale et la direction circonférentielle.

8. Guidage d'étrier de frein selon la revendication 7, **caractérisé en ce que** la zone de section radialement intérieure (36) et la zone de section radialement extérieure (37) sont séparées l'une de l'autre par un trou oblong (40) orienté dans la direction circonférentielle.

9. Bague de sûreté pour la fixation d'un soufflet qui sur une portion de la longueur entoure une barre de guidage d'un guidage d'étrier de frein, **caractérisée en ce que** la bague de sûreté (33) comporte, en vue du blocage axial dans une rainure annulaire (30) de la barre de guidage (10), des structures (35) qui sont agencées à l'intérieur de manière élastique dans la direction radiale et qui s'étendent chacune seulement sur une portion périphérique de la bague de sûreté (33).

10. Bague de sûreté selon la revendication 9, **caractérisée en ce que** des segments (S2) de la bague (33), munis des structures (35), alternent avec d'autres segments (S1), sur lesquels la bague (33) est munie respectivement d'un collet (34) qui s'étend dans la direction axiale.

11. Bague de sûreté selon la revendication 9, **caractérisée en ce que** celle-ci, sur sa portion périphérique munie de la structure (35), comporte une zone de section radialement intérieure (36) et une zone de section radialement extérieure (37), la zone de section intérieure (36) comportant la structure (35) et étant réalisée de manière élastique dans la direction radiale, et la zone de section extérieure (37) étant réalisée de manière rigide dans la direction radiale et la direction circonférentielle.

12. Bague de sûreté selon la revendication 11, **caractérisée en ce que** la zone de section radialement intérieure (36) et la zone de section radialement extérieure (37) sont séparées l'une de l'autre par un trou oblong (40) orienté dans la direction circonférentielle.
